# EUROPEAN PATENT APPLICATION

(11) **EP 2 512 104 A1**
(43) Date of publication of application: **17.10.2012**
(21) Application number: 12162987.7
(22) Date of filing: 03.04.2012
(51) Int. Cl.: H04L 29/08, G06F 9/50

(54) **Software service infrastructure and method including a federated model**

(30) Priority: 11.04.2011 US 201113083875
(71) Applicant: General Electric Company, Schenectady, NY 12345 (US)
(72) Inventor: Xu, Michael, Chenyan, Atlanta, GA 30339-8402 (US)
(74) Representative: Cleary, Fidelma

(57) **Abstract**

A software service infrastructure (SSI) (100) that includes a federated model is also includes a plurality of application programs (106a....106n), a computing device (104) that utilizes the application programs and is coupled to the plurality of application programs through a communication network (102), and a data repository (108) coupled to the communication network and configured to receive request (212) for data stored in the federated models from the plurality of application programs and provide responses to the requests is disclosed. The data repository includes first and second directory servers (204, 206) each containing a copy of the federated model and a control element (202) that directs the request for data stored in the federated model to either the first or second directory server based on usage amounts of the first and second directories.

## Description

### BACKGROUND OF THE INVENTION

The subject matter disclosed herein relates to distributed systems and, in particular, to storing providing access to information about elements in the distributed system.

Systems that employ a Software Service Infrastructure (SSI) utilize multiple shared servers that provide resources, software, and data to computers and other devices. Such systems can include several applications that require access to information about either real or virtual elements that can be affected by the SSI. For example, the SSI can provide services to a control system controlling a machine. The SSI and the systems they are included in or in which they form a part of can be public, private or a combination thereof.

SSI's are model driven. As such, hardware elements in the system can be defined by a particular component information model (CIM). A CIM can be used to map a hardware element in the system to a software object. However, the fact that different elements can be defined by different information (i.e., different CIMs) can require relying on a so-called "federated model" that provides a common interface to all of the different CIMs used to describe the elements in the system. After initialization, it is common for data in the federated model to be retrieved, updated, added or deleted by one or more applications in the SSI. The data is requested from and provided by the server(s) dedicated to storing the federated model.

### BRIEF DESCRIPTION OF THE INVENTION

According to the invention, a software service infrastructure (SSI) including a federated model is disclosed. The SSI of this aspect includes a plurality of application programs, a computing device that utilizes the application programs and is coupled to the application programs through a communication network, and a data repository coupled configured to receive request for data stored in the federated models from the plurality of application programs and provide responses to the requests is disclosed. The data repository of this aspect includes first and second directory servers each containing a copy of the federated model and a control element that directs a request for data stored in the federated model to either the first or second directory server based on usage amounts of the first and second directories or on where a prior request was directed.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is block diagram of a software service infrastructure (SSI) according to one embodiment; and
FIG. 2 illustrates a data repository that can be utilized in the SSI shown in FIG. 1.

The detailed description explains embodiments of the invention, together with advantages and features, by way of example with reference to the drawings.

### DETAILED DESCRIPTION OF THE INVENTION

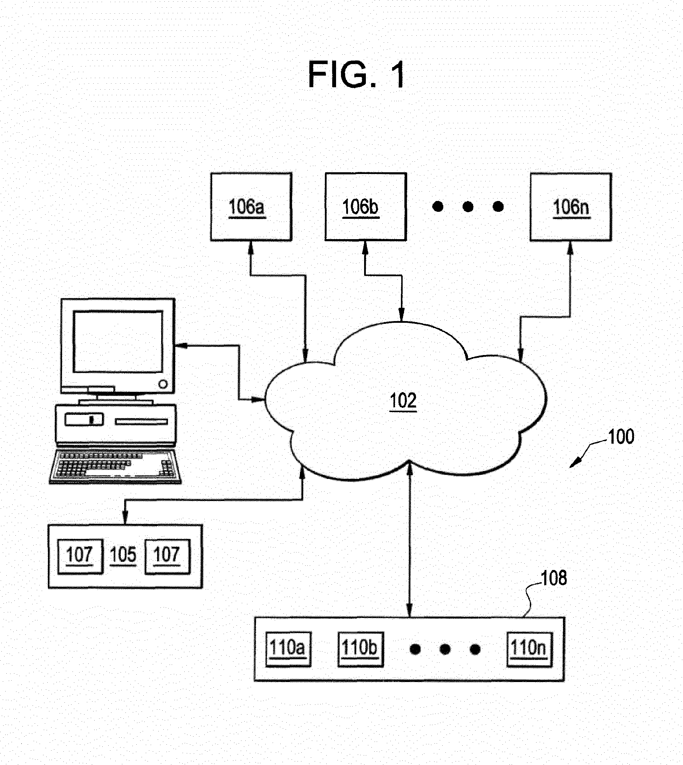

Referring now to FIG. 1, an SSI 100 is illustrated. The SSI 100 includes a communication network 102. The communication network 102 can provide for any type of communication between any of the elements that form the SSI 100. The communication network 102 can include Internet Protocol (IP)-based networks for communication between clients and servers. The clients can operate, for example, on a computing device 104 coupled to the communication network 102 and can be either thin or thick clients.

In some cases, the communication network 102 may be implemented in a wireless fashion, e.g., using wireless protocols and technologies, such as WiFi, WiMax, BLUETOOTH, etc. The communication network 102 can also be a packet-switched network implemented as a local area network, a wide area network, a metropolitan area network, an Internet network, or other similar types of networks. The communication network 102 may be a cellular communications network, a fixed wireless network, a wireless local area network (LAN), a wireless wide area network (WAN), a personal area network (PAN), a virtual private network (VPN), an intranet or any other suitable network, and the communication network 102 may include equipment for receiving and transmitting signals, such as a cell tower, a mobile switching center, a base station, and a wireless access point. Of course, the communication network 102 can be representative of a countless number of interconnected networks.

The SSI 100 also includes a computing device 104. The computing device 104 can be, for example, a control system that controls a machine or other device as illustrated by controlled machine 105. The controlled machine 105 includes several elements 107. The elements 107 can be either passive or active and, as such, can either report values and status indications, receive commands or any combination thereof. The elements 107 can be, for example, valves or sensors.

The SSI 100 illustrated in FIG. 1 includes one or more application programs 106a, 106b,...106n (collectively, application programs 106) operatively coupled to the communications network 102. The application programs 106 can be supported on a server or other computing device. In operation, the application programs 106 require information about, or change information related to, the computing device 104, the controlled machine 105, elements 107, or other elements (e.g., devices) in the SSI 100. As such, the SSI 100 includes a data repository 108 that is operatively coupled to the communications network 102 and that stores information about some or all of the computing device 104, the controlled machine 105, the elements 107, or other devices. It shall be understood that other devices or programs not illustrated in FIG. 1 may also be provided access to the data repository 108.

In one embodiment, the data repository 108 includes one or more servers 110a, 110b,...110n or other storage devices that store information about some or all of the devices or programs in the SSI 100. The servers 110 are directory servers in one embodiment. In such an embodiment, the servers 110 can be Lightweight Directory Access Protocol (LDAP) servers.

The SSI 100 illustrated in FIG. 1 can, generally, be operated as described below. It shall be understood, however, that the operational description is merely an example and the SSI 100 can operate in a different manner without departing from the scope of embodiments disclosed herein.

In order to control the controlled machine 105, the computing device 104 can call on one or more of the application programs 106 to cause, for example, a particular valve of the machine to open or close. The selected application program 106, as is the case in SSI systems in general, may not include a description of the valve itself or values related to it. Rather, it requests the information required to communicate with the valve (e.g., IP address, model number, serial number, control word bit patterns, status values and locations, and the like) from the data repository 108. The response from the data repository 108 can include all or some of the component information model (CIM) for the valve. In some cases, the application programs 106 have the ability to change status values related to the controlled machine 105 or the elements 107 or both. In any of these cases, the CIM for a particular element can also include current status values. In such a case, the data repository 108 (while possibly including multiple servers) represents a common data storage location for all of the application programs 106. Of course, the data repository 108 can include systems and methods for insuring the coherency of the data stored in it.

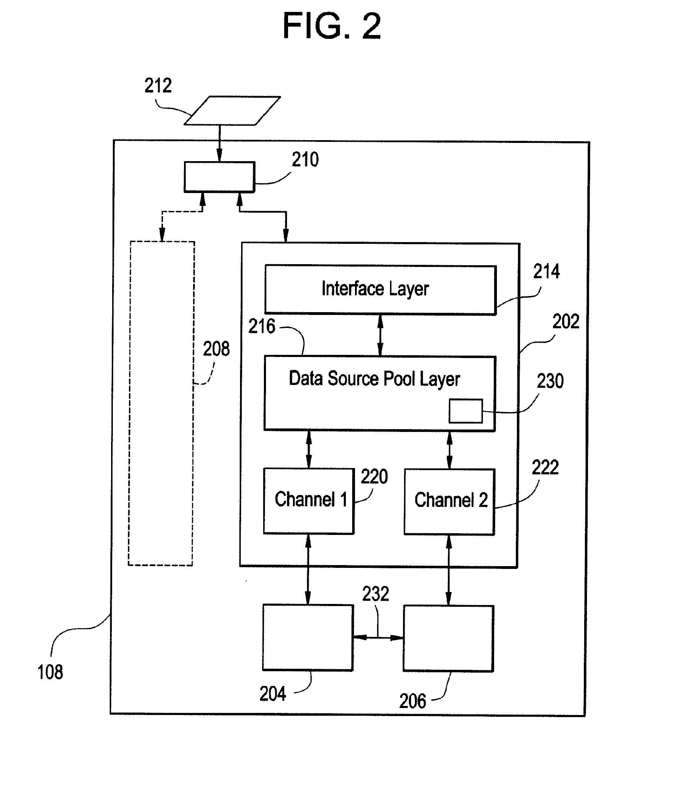

FIG. 2 illustrates an example of a data repository 108. The illustrated data repository 108 includes a control element 202 coupled to a first server 204 and second server 206. The first and second severs 204, 206 can be directory servers and, in particular, LDAP servers. In one embodiment, the data repository 106 includes more than the two illustrated servers 204, 206. Indeed, it is a technical effect of the present invention that the number of directory servers 204, 206 can be increased or decreased without requiring significant (or any) reconfiguration of the control element 202. The control element 202 can be implemented as a proxy server in one embodiment.

In one embodiment, and as indicated in dashed lines in FIG. 2, the data repository 106 includes a backup control element 208. The backup control element 208 serves as a hot standby in the case the control element 202 fails. Of course, a hardware balancer 210 or other device can be included in such an embodiment to cause requests 212 directed to the data repository 108 to be directed to the backup control element 208 in the event that the control element 202 fails. For purposes of this explanation it shall be assumed that the backup control element 208 functions in the same or a similar manner as the control element 204. As such, the backup control element 208 is not discussed further herein.

The control element 202 includes an interface layer 214. After being directed by the hardware balancer 206 (if present), a data access request 212 is provided to the interface layer 208. The data access request 212 can be received, for example, from any of a number of application programs 106 (FIG. 1). The interface layer 214 converts the data access request 212 into a form that is understandable by the directory servers 204, 206.

The control element 202 further includes a data source pool layer 216. The data source pool layer 216 includes a record of the servers 204, 206 in the data repository 108. Based on usage or other factors described below, the data source pool 216 selects a channel 220, 222 for the data access request 212. If the first channel 220 is selected, the data access request is provided to the first server 204. If the second channel is selected, the request is provided to the second server 206.

It shall be understood that the number of channels 220, 222 can vary depending on the number of servers 204, 206 in the data repository 108. In one embodiment, each server 204, 206 has its own dedicated channel. Of course, a single router or other device could support communication to all of the servers 204, 206 in the data repository 108.

As indicated by link 232, the servers 204, 206 have the information contained within them replicated to each other. Replication techniques are well known and are not discussed in detail herein.

The data source pool layer 216 includes logic 230 allowing it to select which channel 220, 222 to route the data access request 210. The logic 230 accounts for several different situations. For example, in the event that one of the servers (e.g., the first server 204) is inoperative, the logic 230 can direct all data access requests 212 to one of the other servers (e.g., the second server 206). When the inoperative server regains functionality, the logic 230 can again assign data access requests to both servers. In addition, the logic 230 can include algorithms for load balancing between the first and second servers 204, 206. Of course, if additional servers are present, the logic 230 need only know of them in order to balance load amongst all of the servers. In addition, in some cases, to ensure coherency, the logic 230 can include an algorithm that routes data access requests for the same data that arrive between replications to the server that last handled the data access request for the data.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A software service infrastructure (SSI) (100) including a federated model comprising:
a plurality of application programs (106a....106n);
a computing device (104) that utilizes the plurality of application programs (106a....106n) and is coupled to the plurality of application programs (106a....106n) through a communication network (102); and
a data repository (108) coupled to the communication network (102) and configured to receive a request (212) for data stored in the federated model from the plurality of application programs (106a....106n) and provide responses to the requests (212) , the data repository (108) including:
first and second directory servers (204, 206) each containing a copy of the federated model; and
a control element (202) that directs the request (212) for data stored in the federated model to either the first or second directory server (204, 206) based on usage amounts of the first and second directory servers (204, 206).

2. The software service infrastructure (SSI) of claim 1, wherein the request (212) for data stored in the federated model is directed to either the first or second directory server (204,206) based on usage amounts of the first and second directory servers (204,206).

3. The software service infrastructure (SSI) (100) of claim 1, wherein the request (212) for data stored in the federated model is directed to either the first or second directory server (204, 206) based a where a prior request (212) was directed.

4. The SSI (100) of claim 2, further comprising:
a third directory server that contains a copy of the federated model;
wherein the control element (202) direct the request (212) for data stored in the federated model to either the first (204) , second (206) or third directory server based on usage amounts of the first, second and third directory servers.

5. The SSI of claim 2, wherein the control element (202) includes a data source pool layer (216) configured to record the usage amounts on the first and second directory servers (204, 206).

6. The SSI (100) of claim 3, wherein the control element (202) includes a data source pool layer (216) configured to record the store where the prior request (212) was directed.

7. The SSI (100) of claim 5 or 6, wherein the data source pool layer (216) is further configured to determine whether the request (212) is to be directed to the first directory server (204) of the second directory server (206).

8. The SSI (100) of claim 3, wherein first and second directory servers (204, 206) and configured to replicate changes in one of them to the other.

9. The SSI (100) of claim 7, wherein the control element (202) directs the request (212) to the same directory server the prior request (212) was directed to if it is for the same data as the prior request (212).

10. The SSI (100) of claim 7, wherein the control element (202) directs the request (212) to the same directory server the prior request (212) was directed to if it is for the same data as the prior request (212) and the affect to the prior request (212) has not been replicated.

11. The SSI of any preceding claim, wherein the first and second directory servers (204,206) are light weight directory access protocol servers.

12. The SSI of any preceding claim, wherein the control element (202) is a proxy server.
